# EUROPÄISCHE PATENTSCHRIFT

(11) **EP 2 350 529 B1**
(45) Veröffentlichungstag und Bekanntmachung des Hinweises auf die Patenterteilung: **14.12.2016**
(21) Anmeldenummer: 09782263.9
(22) Anmeldetag: 27.08.2009
(51) Int. Cl.: D06F 75/06, D06F 58/20, F22B 37/78, F22B 1/28, G01F 23/24

(54) **HAUSHALTSGERÄT MIT EINEM BEFÜLLBAREN DAMPFKESSEL UND DAMPFKESSEL FÜR EIN HAUSHALTSGERÄT**
HOUSEHOLD APPLIANCE HAVING A FILLABLE STEAM BOILER, AND STEAM BOILER FOR A HOUSEHOLD APPLIANCE
APPAREIL ÉLECTROMÉNAGER POURVU D'UN GÉNÉRATEUR DE VAPEUR POUVANT ÊTRE REMPLI ET GÉNÉRATEUR DE VAPEUR POUR APPAREIL ÉLECTROMÉNAGER

(30) Priorität: 22.09.2008 DE 102008042275; 22.09.2008 ES 200802761
(43) Veröffentlichungstag der Anmeldung: 03.08.2011
(73) Patentinhaber: BSH Hausgeräte GmbH, 81739 München (DE)
(72) Erfinder: NOGUEIRA MORAZA, Jesus Maria, E-01007 Vitoria (ES)
(86) Internationale Anmeldenummer: PCT/EP2009/061052
(87) Internationale Veröffentlichungsnummer: WO 2010/031666

(56) Entgegenhaltungen:
- EP-A1- 1 619 291
- EP-A2- 0 887 588
- WO-A2-2005/024300
- DE-A1-102008 042 274

## Beschreibung

Die Erfindung betrifft ein Haushaltsgerät mit einem befüllbaren Dampfkessel und einen Dampfkessel für ein Haushaltsgerät nach den Oberbegriffen der unabhängigen Ansprüche.

Haushaltsgeräte mit Dampferzeugung werden in verschiedenen Bereichen eingesetzt. So wird zunehmend in Haushalten Dampf zur Reinigung von Fenstern, Böden und Einrichtungsgegenständen verwendet und insbesondere zum Bügeln eingesetzt. So ist aus der DE 697 27 211 T2 eine Dampfbügeleisenstation mit einem Dampfkessel bekannt. Üblicherweise wird Dampf in einem Dampfkessel erzeugt, indem Wasser zugeführt und mit einem elektrischen Widerstandserhitzer aufgekocht wird, bis Dampf entsteht, der vorzugsweise in einem bestimmten Druckbereich einem angeschlossenen Verbraucher, z.B. einem Bügeleisen, zu Verfügung gestellt wird. Im Dampfkessel ist ein NTC-Temperatursensor angeordnet, der bei Wasserzufuhr zum Dampfkessel bei ausreichend nachgefülltem Wasser im Dampfkessel ein Signal ausgibt, das die Wasserzufuhr in den Dampfkessel stoppt.

Die DE 600 06 296 T2 zeigt einen Dampferzeuger mit automatischer Nachfüllfunktion für zum Beispiel Dampfreinigungsgeräte, Bügeleisen, Kaffeemaschinen und dergleichen. Ein weiterer Dampferzeuger für Bügeleisen, Kaffemaschinen und dgl. ist aus der EP 0 821 096 A2 bekannt. Weiterer Stand der Technik ist in der WO 2005/024300 A2, der EP 1 619 291 A1 und in der EP 0 887 588 A2 gezeigt.

Der Erfindung liegt die Aufgabe zugrunde, ein verbessertes Haushaltsgerät mit einem befüllbaren Dampfkessel zu schaffen, bei dem ein stabileres Druckniveau eingehalten werden kann. Eine weitere Aufgabe besteht darin, einen verbesserten Dampfkessel für ein solches Haushaltsgerät anzugeben.

Diese Aufgaben werden erfindungsgemäß mit den Merkmalen der unabhängigen Ansprüche gelöst.

Es wird ein Haushaltsgerät mit einem befüllbaren Dampfkessel mit einem von Begrenzungswänden umschlossenen Innenraum vorgeschlagen, wobei in wenigstens einer Begrenzungswand ein Einlass für eine Flüssigkeit vorgesehen ist. Der Einlass ist so in Bezug auf einen Sensor zur Erfassung eines Füllstands im Dampfkessel angeordnet, dass ein aus dem Einlass in den Dampfkessel eintretender Flüssigkeitsstrahl zuerst auf einen Koppelbereich des Sensors mit dem Dampfkessel trifft, wenn der Einlass Flüssigkeit in den Innenraum des Dampfkessels abgibt, bevor sich die Flüssigkeit im Dampfkessel sammelt, wobei der Einlass mit seiner Öffnung zum Koppelbereich gerichtet ist und der Sensor auf einer Höhe angeordnet ist, welche der Sollhöhe des Flüssigkeitspegels im Dampfkessel entspricht.

Der Koppelbereich des Sensors wird zunächst von der eintretenden Flüssigkeit abgekühlt, bevor die Flüssigkeit sich im Innenraum des Dampfkessels sammelt und diesen füllt. Vorteilhaft lässt sich damit erreichen, dass der Sensor sehr schnell auf nachfließende, üblicherweise kalte Flüssigkeit, z.B. Wasser, anspricht. Der Sensor kann z.B. auf einer Höhe angeordnet sein, welche einem oberen Bereich eines Heizelements im Innenraum des Dampfkessels entspricht. Vorteilhaft kann der Sensor dabei benachbart zu einem Abschnitt des Heizelements angeordnet sein. Der obere Bereich des Heizelements kann vorzugsweise dem gewünschten Füllstand der Flüssigkeit im Dampfkessel entsprechen. So kann das Heizelement in die Flüssigkeit eintauchen und z.B. mit der Oberfläche der Flüssigkeit abschließen oder geringfügig über die Oberfläche hinausragen.

Mit einem Signal des Sensors wird das Nachfüllen der Flüssigkeit im Dampferzeugungsbetrieb des Haushaltsgeräts gesteuert. Das Sensorsignal kann dabei an ein Steuergerät gegeben werden, das eine weitere Zufuhr von Flüssigkeit in den Dampfkessel unterbindet, wenn der gewünschte Füllstand erreicht ist. Wird die Zufuhr von Flüssigkeit rechtzeitig gestoppt, kann ein schnelleres Aufheizen der zugeführten Flüssigkeit erfolgen und ein gewünschter Überdruck des entstehenden Dampfes erreicht werden. Das Sensorsignal signalisiert der Steuerung, ob eine ausreichende Menge Flüssigkeit zur Verfügung steht, die aufgeheizt und verdampft werden kann. Ist eine ausreichende Menge vorhanden, wird diese aufgeheizt und wenigstens teilweise verdampft. Aufgrund der Menge der Flüssigkeit und des Kesselvolumens stellt sich dann ein Nominaldruck des Dampfes ein.

Spricht der Sensor zu langsam an, wie das bei bekannten Systemen der Fall ist, kann der Pegel der Flüssigkeit stark schwanken. Die Flüssigkeitsmenge kann dann zufällig kleiner oder größer sein als benötigt. Der Druck im Dampfkessel kann in diesem Fall aufgrund der unterschiedlichen zu verdampfenden Flüssigkeitsmenge stark um den eigentlich gewünschten Nominalwert schwanken. Mit der erfindungsgemäßen Lösung kann jedoch der Nominalwert deutlich genauer erreicht werden.

Dadurch, dass der Einlass mit seiner Öffnung zum Koppelbereich gerichtet ist, kann der Koppelbereich unmittelbar von der zugeführten Flüssigkeit beeinflusst werden, insbesondere abgekühlt werden. Vorteilhaft kann die Öffnung benachbart zum Koppelbereich angeordnet sein. Der Einlass kann prinzipiell an jeder Begrenzungswand des Dampfkessels angeordnet sein. Ist die Öffnung auf den Koppelbereich gerichtet, kann ein aus der Öffnung austretender Flüssigkeitsstrahl trotzdem sicher auf den Koppelbereich gelenkt werden. Vorteilhaft kann der Einlass als Rohrstutzen ausgebildet sein, der durch eine Begrenzungswand des Dampfkessels geführt ist und z.B. auf beiden Seiten übersteht. Der in den Innenraum überstehende Abschnitt des Rohrstutzens kann günstigerweise zum Koppelbereich hin geneigt sein. Ferner kann der Durchtrittsbereich des Rohrstutzens nahe zu dem wenigstens einen Sensor angeordnet sein, z.B. nahe zu einer Kante derjenigen Begrenzungswand, an der der Sensor angeordnet ist.

Gemäß einer weiteren vorteilhaften Weiterbildung der Erfindung kann der Einlass mit seiner Öffnung gegen einen oberen Bereich des Koppelbereichs gerichtet sein. Trifft der Flüssigkeitsstrahl auf den oberen Bereich, verteilt sich die Flüssigkeit an der Begrenzungswand und kühlt diese und damit den Koppelbereich schnell ab. Der angekoppelte Sensor detektiert diese Abkühlung und gibt das entsprechende Temperatursignal an die Steuerung.

Gemäß einer weiteren vorteilhaften Weiterbildung der Erfindung kann der Einlass geodätisch oberhalb des Sensors angeordnet sein. Dies ergibt eine besonders einfache Anordnung. Der aus dem Einlass bzw. dessen Öffnung austretende Flüssigkeitsstrahl kann von oben auf die Behälterwand treffen und über den Koppelbereich nach unten rinnen und somit den Bereich der Behälterwand mit dem Koppelbereich abkühlen.

Gemäß einer weiteren vorteilhaften Weiterbildung der Erfindung kann der Sensor ein Temperatursensor sein. Bevorzugt kann der Temperatursensor ein NTC-Widerstandselement umfassen. Ein NTC-Widerstand (Negative Temperature Coefficient Thermistor) besteht aus einem elektrischen Leiter, der bei hohen Temperaturen besser leitet als bei niedrigen Temperaturen.

Gemäß einer weiteren vorteilhaften Weiterbildung der Erfindung können der Sensor an einer Seitenwand des Dampfkessels und der Einlass in einer oberen Begrenzungswand des Dampfkessels angeordnet sein. Dies ist eine besonders einfache Geometrie der Anordnung. Der Sensor kann auf der Höhe angebracht sein, die dem gewünschten Füllstand der Flüssigkeit entspricht.

Vorteilhaft ist eine Ausgestaltung des Haushaltsgeräts als Dampfbügeleisenstation mit einem an den Dampfkessel angekoppelten Dampfbügeleisen. Der Dampfkessel kann ein separates Bauteil sein, an welches das Dampfbügeleisen angekoppelt ist. Der Dampfkessel kann jedoch auch in das Dampfbügeleisen integriert sein.

Weiterhin kann eine Ausgestaltung als Dampfreinigungsstation mit einem an den Dampfkessel angekoppelten Dampfreinigungsgerät vorteilhaft sein. Weiterhin kann eine Ausgestaltung eine Ausgestaltung als Heißgetränkebereiter vorteilhaft sein, etwa als Kaffeeautomat.

Nach einem weiteren Aspekt der Erfindung wird ein Dampfkessel für ein Haushaltsgerät vorgeschlagen, bei dem ein Einlass für eine Flüssigkeit so in Bezug auf einen Koppelbereich eines Sensors mit einer Begrenzungswand angeordnet ist, dass der Koppelbereich einem Flüssigkeitsstrahl des Einlasses ausgesetzt ist, wenn der Einlass Flüssigkeit in den Innenraum des Dampfkessels abgibt. In den Dampfkessel eintretende Flüssigkeit kühlt zunächst den Koppelbereich ab, bevor die Flüssigkeit den Innenraum auffüllt, wobei der Einlass mit seiner Öffnung zum Koppelbereich gerichtet ist und der Sensor auf einer Höhe angeordnet ist, welche der Sollhöhe des Flüssigkeitspegels im Dampfkessel entspricht. Der Flüssigkeitsstrahl kann den Koppelbereich schnell abkühlen, und der Sensor kann entsprechend zuverlässig und schnell das Erreichen eines gewünschten Füllstands erkennen.

Vorteilhaft kann die Öffnung benachbart zum Koppelbereich angeordnet sein. Dadurch kann der Koppelbereich unmittelbar von der zugeführten Flüssigkeit beeinflusst werden, insbesondere abgekühlt werden. Der Einlass kann prinzipiell an jeder Begrenzungswand des Dampfkessels angeordnet sein. Ist die Öffnung auf den Koppelbereich gerichtet, kann ein aus der Öffnung austretender Flüssigkeitsstrahl trotzdem sicher auf den Koppelbereich gelenkt werden. Vorteilhaft kann der Einlass als Rohrstutzen ausgebildet sein, der durch eine Begrenzungswand des Dampfkessels geführt ist und z.B. auf beiden Seiten übersteht. Der in den Innenraum überstehende Abschnitt des Rohrstutzens kann günstigerweise zum Koppelbereich hin geneigt sein. Ferner kann der Durchtrittsbereich des Rohrstutzens nahe zu dem wenigstens einen Sensor angeordnet sein, z.B. nahe zu einer Kante derjenigen Begrenzungswand, an der der Sensor angeordnet ist.

Gemäß einer weiteren vorteilhaften Weiterbildung der Erfindung kann der Einlass mit seiner Öffnung gegen einen oberen Bereich des Koppelbereichs gerichtet sein. Die Flüssigkeit kann im oberen Bereich des Koppelbereichs an die Behälterwand treffen und über den Koppelbereich nach unten fließen, wobei der Koppelbereich und damit der Sensor abgekühlt werden. Der Einlass kann dann grundsätzlich an jeder beliebigen Behälterwand angeordnet sein. Dies erlaubt eine große Gestaltungsfreiheit des Dampfkessels.

Gemäß einer weiteren vorteilhaften Weiterbildung der Erfindung kann der Einlass geodätisch oberhalb des Sensors angeordnet sein. Zweckmäßigerweise kann die Öffnung ebenso oberhalb des Koppelbereichs enden. Die Flüssigkeit kann oberhalb des Koppelbereichs an die Behälterwand treffen und über den Koppelbereich fließen, der dabei abgekühlt wird.

Gemäß einer weiteren vorteilhaften Weiterbildung der Erfindung können der Sensor an einer seitlichen Begrenzungswand des Dampfkessels und der Einlass in einer oberen Begrenzungswand des Dampfkessels angeordnet sein.

Anhand eines in der Zeichnung dargestellten Ausführungsbeispiels wird die Erfindung nachfolgend näher beschrieben. Es zeigt:
- Fig. 1: eine schematische Ansicht eines bevorzugten Haushaltsgeräts mit einem Dampfkessel nach der Erfindung;
- Fig. 2: einen bekannten Dampfkessel im Schnitt; und
- Fig. 3: eine bevorzugte Ausgestaltung eines erfindungsgemäßen Dampfkessels im Schnitt.

In den Figuren werden gleiche oder im Wesentlichen gleich bleibende Elemente mit den gleichen Bezugszeichen versehen.

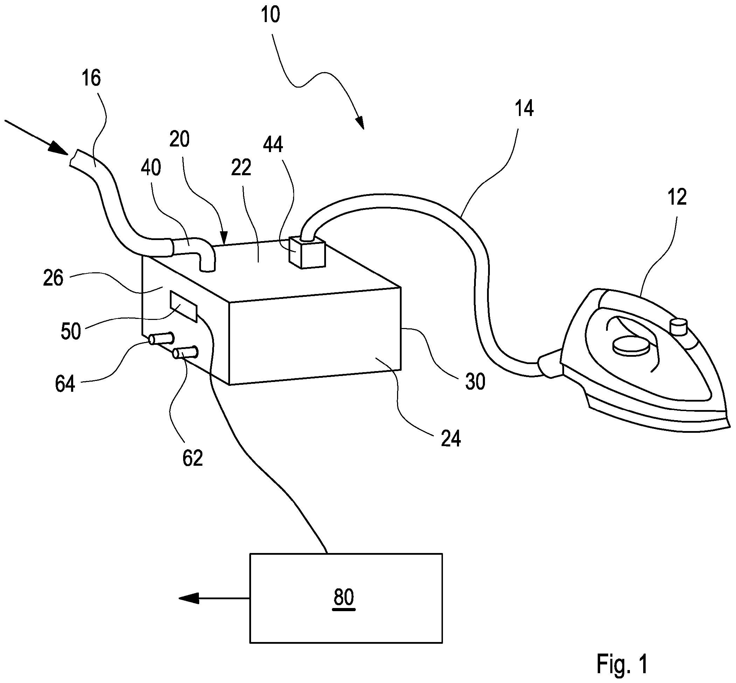

Fig. 1 zeigt beispielhaft ein als Dampfbügeleisenstation ausgebildetes bevorzugtes Haushaltsgerät 10 mit einem Dampfkessel 20 und einem damit verbundenen Verbraucher 12, der z.B. als Dampfbügeleisen ausgebildet ist. Der als Dampfbügeleisen ausgebildete Verbraucher 12 ist mit einem Schlauch 14 an einen Auslass 44 des Dampfkessels 20 angeschlossen und wird über diesen mit Dampf versorgt.

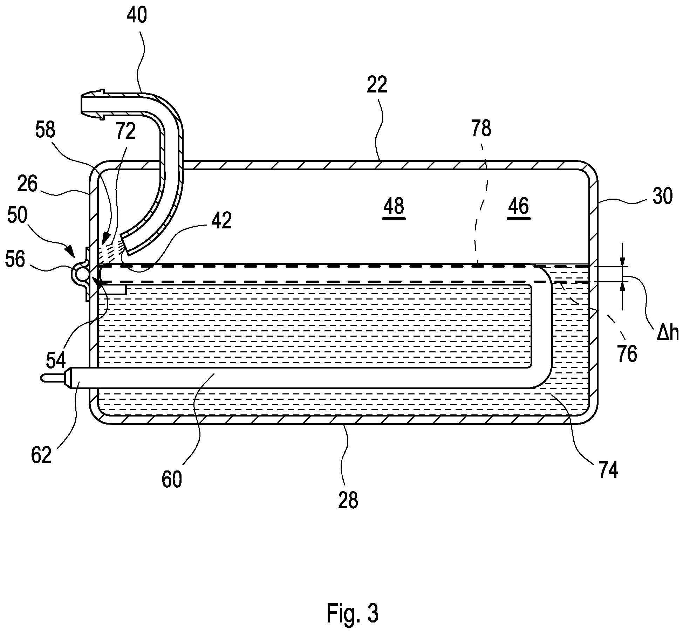

Der Dampfkessel 20 weist Begrenzungswände auf, von denen einige mit Bezugszeichen 22, 24, 26, 28, 30 bezeichnet sind, die einen Innenraum umschließen, in welchem Flüssigkeit, z.B. Wasser, verdampft wird, welche über eine Zuleitung 16 durch eine Pumpe (nicht dargestellt) oder aus einem Reservoir (nicht dargestellt) dem Dampfkessel 20 zugeführt wird. Die Flüssigkeit gelangt über einen Einlass 40 in den Dampfkessel 20. Zum Erhitzen der Flüssigkeit ist ein Heizelement (Heizelement 60, Fig. 3) vorgesehen, das mit elektrischen Anschlüssen 62, 64 versehen ist.

An der Außenseite des Dampfkessels 20 ist ein Sensor 50 an einer Begrenzungswand 26 angeordnet. Der Sensor 50 erfasst eine Temperatur im Dampfkessel 20. Abhängig von der erfassten Temperatur kann eine Regel- und/oder Steuereinheit 80, welche die Flüssigkeitszufuhr zum Dampfkessel 20 steuert, Flüssigkeit zuführen bzw. eine Flüssigkeitszufuhr beenden.

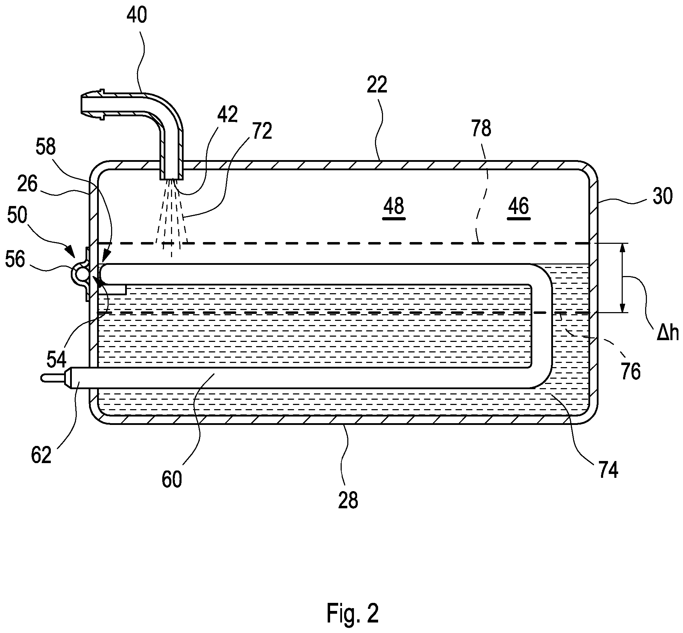

Die Fig. 2 illustriert im Schnitt eine Ausführung eines bekannten Dampfkessels 20. Im Innenraum 46 des von Begrenzungswänden 22, 26, 28, 30 umschlossenen Dampfkessels 20 ist ein z.B. elektrisches Heizelement 60 angeordnet, dessen Anschlüsse, von denen der Anschluss 62 im Schnitt erkennbar ist, durch eine Begrenzungswand 22 geführt sind. Das Heizelement 60 ist in mehreren Abschnitten abgewinkelt und endet auf einer Höhe des Dampfkessels 20. Es soll soviel Flüssigkeit 74 in den Innenraum 46 eingefüllt werden, dass das Heizelement 60 in die Flüssigkeit 74 eintauchen kann. Die Flüssigkeit 74 wird durch das Heizelement 60 aufgeheizt und nahe des Siedepunkts der Flüssigkeit 74 gehalten.

An der Begrenzungswand 22 ist auf Höhe des oberen Bereichs des Heizelements 60 ein Sensor 50 angeordnet. Die Temperatur in diesem Bereich kann durch den Sensor 50 erfasst werden. Der Sensor 50 ist mit einer Halterung 56 außen an der Begrenzungswand 26 befestigt und weist einen Koppelbereich 54 mit der Begrenzungswand auf 26, der eine gewisse flächige Ausdehnung hat, welche die Kontaktstelle des Sensors 50 mit der Begrenzungswand 26 und deren benachbarte Bereiche umfasst.

Taucht das Heizelement 60 in die Flüssigkeit 74 ein, erfasst der Sensor die Temperatur der Flüssigkeit 74. Sinkt der Flüssigkeitspegel so weit ab, dass der obere Bereich des Heizelements 60 aus der Flüssigkeit ragt, erfasst der Sensor 50 die Temperatur des Heizelements 60, die im Betrieb oberhalb der Temperatur der Flüssigkeit 74 liegt. Dieser Temperaturanstieg wird vom Sensor 50 erfasst.

In einer oberen Begrenzungswand ist ein Einlass 40 angeordnet, durch dessen Öffnung 42 ein Flüssigkeitsstrahl 72, z.B. ein Wasserstrahl, in den Innenraum 46 eintreten kann. Der Einlass 40 ist z.B. als Rohrstutzen oder Rohrstück ausgebildet, das außen einen Anschluss zum Anbringen eines Verbindungsschlauchs 16 (Fig. 1) zu einer Pumpe oder einem Reservoir aufweist (nicht dargestellt) und in den Innenraum 46 mit einer Öffnung 42 in einen etwa zentralen Bereich des Dampfkessels 20 mündet.

Dadurch, dass der Auslass 40 in einem zentralen Bereich des Dampfkessels 20 angeordnet ist, füllt sich der Dampfkessel 20 allmählich mit Flüssigkeit 74. Erst dann, wenn der Füllstand über eine gewisse Schwelle angestiegen ist, kann der Sensor 50 eine ausreichende Temperaturänderung, d.h. Abkühlung detektieren.

Je nach aktuellen Bedingungen kann der Sensor 50 schon bei einem ersten Füllstand 76 oder erst bei einem Füllstand 78 erkennen, dass der gewünschte Füllstand scheinbar erreicht ist.

Wird der Flüssigkeitsstrahl 72 in den Dampfkessel 20 abgegeben, reagiert der Sensor 50 allerdings erst nach einer bestimmten Zeit auf die langsam ansteigende Flüssigkeit 74, die von der bodenseitigen Begrenzungswand 28 nach oben ansteigt. Die Reaktionszeit des Sensors 50 kann von verschiedenen Bedingungen abhängen, wie etwa der Temperatur der zugeführten Flüssigkeit und dergleichen, so dass die Flüssigkeit 74 entsprechend zwischen einem ersten Füllstand 76 und einem zweiten Füllstand 78 innerhalb einer relativ großen Schwankungsbreite Δh schwanken kann. Sobald der Sensor 50 eine Temperaturänderung aufgrund der ansteigenden Flüssigkeit 74 erfasst, wird der jeweilige tatsächlich erreichte Pegel der Flüssigkeit 74 zwischen dem ersten und zweiten Füllstand 76, 78 von der Regel- und/oder Steuereinheit 80 (Fig.1) so interpretiert, als ob der gewünschte Sollwert erreicht worden wäre, was sich jedoch wegen der großen Schwankungsbreite Δh als stark fehlerbehaftet erweist.

Die Schwankungsbreite Δh der eintretenden Flüssigkeit 74 entspricht bei beispielhaften Abmessungen und Volumenfluss der Flüssigkeit z.B. einer Füllmenge von 30 g. Durch die relativ große Flüssigkeitsmenge wird der Dampfkessel 20 abgekühlt, so dass die Temperatur der Flüssigkeit 74 und der Druck im Dampfkessel 20 schwanken. So variiert der Druck im Dampfkessel 20 je nach Volumen und Solldruck bei einem beispielhaften Nennwert von 4 bar zwischen ungefähr z.B. 2,5 und 5 bar.

Fig. 3 zeigt eine bevorzugte Ausgestaltung eines Dampfkessels 20 gemäß der Erfindung. Der Aufbau des Dampfkessels 20 ähnelt dem aus der Fig. 2, auf deren Beschreibung zur Vermeidung unnötiger Wiederholungen verwiesen wird.

Gemäß einem bevorzugten Ausführungsbeispiel der Erfindung ist der Einlass 40 so in Bezug auf den Sensor 50 und dessen Koppelbereich 54 mit dem Dampfkessel 20 bzw. dessen Begrenzungswand 26 angeordnet, dass der Koppelbereich 54 einem Flüssigkeitsstrahl 72 aus dem Einlass 40 in den Dampfkessel 20 ausgesetzt ist, wenn der Einlass 40 Flüssigkeit 74 in den Innenraum 46 des Dampfkessels 20 abgibt. Dabei trifft der Flüssigkeitsstrahl 72 im Dampfkessel 20 zunächst auf den Koppelbereich 54 des Sensors 50, bevor die Flüssigkeit 74 den Innenraum 46 des Dampfkessels 20 auffüllt. Dabei ist der Einlass 40 mit seiner Öffnung 42 vorzugsweise zum Koppelbereich 54 gerichtet, wobei z.B. das den Einlass 40 bildende Rohrstück entsprechend geneigt ist und zum Koppelbereich 54 hin gerichtet ist.

Der Koppelbereich 54 umfasst vorzugsweise nicht nur die direkte Kontaktstelle des Sensors 50 mit der Begrenzungswand 26, sondern auch eine Fläche, die mindestens der flächigen Ausdehnung des Sensors 50 an der Begrenzungswand 26 entspricht.

Vorzugsweise ist der Sensor 50 ein NTC-Widerstandselement, das mit einer Halterung 56 an der Außenseite der Begrenzungswand 26 so befestigt ist, dass der Sensor 50 zwischen einer die Halterung 56 bildenden Lasche und der Begrenzungswand 26 eingeklemmt ist. Ein NTC-Widerstand weist bei einer hohen Temperatur einen geringeren elektrischen Widerstand auf als bei einer niedrigen Temperatur.

Der Einlass 40 ist gemäß einer Ausgestaltung der Erfindung mit seiner Öffnung 42 gegen die Begrenzungswand 26 gerichtet, an welcher der Sensor 50 angekoppelt ist, so dass der Flüssigkeitsstrahl 72 in einem oberen Bereich 58 des Koppelbereichs 54 auf die Begrenzungswand 26 auftrifft. Eine einfache Ausgestaltung besteht darin, dass der rohrförmige Einlass 40 innerhalb des Dampfkessels 20 so umgebogen ist, dass die Öffnung 42 zur Begrenzungswand 26 und zum Koppelbereich 54 des Sensors 50 hin ausgerichtet ist.

Ist die Flüssigkeit 74 im Dampfkessel 20 auf ihre Solltemperatur nahe des Siedepunkts aufgeheizt und z.B. durch Dampfentnahme aus dem Dampfkessel 20 teilweise verdampft, erkennt der Sensor 50 bei absinkendem Flüssigkeitspegel eine ansteigende Temperatur, was die Regel- und/oder Steuereinheit 80 (Fig.1) erkennt und ein Nachfüllen der Flüssigkeit 74 auslöst.

Trifft der Flüssigkeitsstrahl 72 mit kalter Flüssigkeit 74 auf den Koppelbereich 54 der Begrenzungswand 26, erfährt der Sensor 50 auf diese Weise eine deutlich schnellere Temperaturänderung, d.h. Abkühlung, als durch einen langsam ansteigenden Flüssigkeitspegel wie in Fig. 2.

Dementsprechend zeigt sich, dass die Schwankungsbreite Δh zwischen einem ersten minimalen Füllstand 76, ab dem der Sensor 50 auf die Temperaturänderung anspricht, und einem zweiten maximalen Füllstand 78, bis zu dem der Sensor 50 auf die Temperaturänderung anspricht, erheblich geringer ist als in einer Anordnung nach dem Stand der Technik (Fig. 2). Die geringere Schwankungsbreite Δh führt zu deutlich stabileren Druckverhältnissen im Dampfkessel 20.

So entspricht die geringere Schwankungsbreite Δh bei den Verhältnissen des Beispiels in Fig. 2 nur noch einer Füllmenge von 8 g Flüssigkeit, z.B. Wasser, statt vorher 30 g, so dass bei sonst gleichen Verhältnissen der Druck im Dampfraum 48 des Dampfkessels 20 deutlich stabiler ist und nur noch, z.B. bei einem Nennwert von 4 bar, zwischen z.B. 3,5 und 4,5 bar, vorzugsweise zwischen 3,7 und 4,3 bar, schwankt.

Ebenso zeigt sich, dass die Dosierung bei der Dampfentnahme ansteigt, bei den oben gegebenen Verhältnissen z.B. um etwa 20%. So kann einerseits eine Entnahme bei stabileren Druckverhältnissen des Dampfes und andererseits eine erhöhte Dosierung des Dampfes erfolgen.

### Bezugszeichenliste

- 10: Haushaltsgerät
- 12: Verbraucher
- 14: Verbindung
- 16: Verbindung
- 20: Dampfkessel
- 22: Begrenzungswand
- 24: Begrenzungswand
- 26: Begrenzungswand
- 28: Begrenzungswand
- 30: Begrenzungswand
- 40: Einlass
- 42: Öffnung
- 44: Auslass
- 46: Innenraum
- 48: Dampfraum
- 50: Sensor
- 54: Koppelbereich
- 56: Befestigung
- 60: Heizelement
- 62: Anschluss
- 64: Anschluss
- 70: Flüssigkeit
- 72: Flüssigkeitsstrahl
- 74: Flüssigkeit
- 76: Pegel
- 78: Pegel
- 80: Steuergerät
- Δh: Schwankungsbreite

## Patentansprüche

1. Dampfkessel (20) für ein Haushaltsgerät (10), der befüllbar ist, mit einem von Begrenzungswänden (22, 24, 26, 28, 30) umschlossenen Innenraum (46), wobei in wenigstens einer Begrenzungswand (22) ein Einlass (40) für eine Flüssigkeit (74) vorgesehen ist, **dadurch gekennzeichnet, dass** der Einlass (40) so in Bezug auf einen Sensor (50) zur Erfassung eines Füllstands im Dampfkessel (20) angeordnet ist, dass ein aus dem Einlass (40) in den Dampfkessel (20) eintretender Flüssigkeitsstrahl (72) zuerst auf einen Koppelbereich (54) des Sensors (50) mit dem Dampfkessel (20) trifft, wenn der Einlass (40) Flüssigkeit (74) in den Innenraum (46) des Dampfkessels (20) abgibt, bevor sich die Flüssigkeit (74) im Dampfkessel (20) sammelt, wobei der Einlass (40) mit seiner Öffnung (42) zum Koppelbereich (54) gerichtet ist und der Sensor (50) auf einer Höhe angeordnet ist, welche der Sollhöhe des Flüssigkeitspegels im Dampfkessel (20) entspricht.

2. Dampfkessel nach Anspruch 1, **dadurch gekennzeichnet, dass** der Einlass (40) mit seiner Öffnung (42) gegen einen oberen Bereich (58) des Koppelbereichs (54) gerichtet ist.

3. Dampfkessel nach Anspruch 1 oder 2, **dadurch gekennzeichnet, dass** der Einlass (40) geodätisch oberhalb des Sensors (50) angeordnet ist.

4. Dampfkessel nach Anspruch 1,2 oder 3, **dadurch gekennzeichnet, dass** der Sensor (50) an einer seitlichen Begrenzungswand (26) des Dampfkessels (20) und der Einlass (40) in einer oberen Begrenzungswand (22) des Dampfkessels (20) angeordnet ist.

5. Haushaltsgerät (10) mit einem befüllbaren Dampfkessel (20) nach einem der Ansprüche 1 bis 4.

6. Haushaltsgerät nach dem Anspruch 5, **dadurch gekennzeichnet, dass** der Sensor (50) ein Temperatursensor ist.

7. Haushaltsgerät nach Anspruch 6, **dadurch gekennzeichnet, dass** der Sensor (50) ein NTC-Widerstandselement umfasst.

8. Haushaltsgerät nach einem der Ansprüche 5 bis 7, **gekennzeichnet durch** eine Ausgestaltung als Dampfbügeleisenstation mit einem an den Dampfkessel (20) angekoppelten Dampfbügeleisen (12).

9. Haushaltsgerät nach einem der Ansprüche 5 bis 7, **dadurch gekennzeichnet** durch eine Ausgestaltung als Dampfreinigungsstation mit einem an den Dampfkessel (20) angekoppelten Dampfreinigungsgerät.

## Claims

1. Steam boiler (20) for a household appliance (10), which can be filled, having an interior (46) enclosed by boundary walls (22, 24, 26, 28, 30), wherein an inlet (40) for a liquid (74) is provided in at least one boundary wall (22), **characterised in that** the inlet (40) is arranged in respect of a sensor (50) for detecting a fill level in the steam boiler (20) so that a liquid jet (72) entering the steam boiler (20) from the inlet (40) firstly strikes a coupling region (54) of the sensor (50) with the steam boiler (20), if the inlet (40) releases liquid (74) into the interior (46) of the steam boiler (20), before the liquid (74) collects in the steam boiler (20), wherein the inlet (40) with its opening (42) is directed toward the coupling region (54) and the sensor (50) is arranged at a height which corresponds to the nominal height of the liquid level in the steam boiler (20).

2. Steam boiler according to claim 1, **characterised in that** the inlet (40) with its opening (42) is directed against an upper region (58) of the coupling region (54).

3. Steam boiler according to claim 1 or 2, **characterised in that** the inlet (40) is arranged geodetically above the sensor (50).

4. Steam boiler according to claim 1, 2 or 3, **characterised in that** the sensor (50) is arranged on a lateral boundary wall (26) of the steam boiler (20) and the inlet (40) is arranged in an upper boundary wall (22) of the steam boiler (20).

5. Household appliance (10) having a fillable steam boiler (20) according to one of claims 1 to 4.

6. Household appliance according to claim 5, **characterised in that** the sensor (50) is a temperature sensor.

7. Household appliance according to claim 6, **characterised in that** the sensor (50) is an NTC resistance element.

8. Household appliance according to one of claims 5 to 7, **characterised by** an embodiment as a steam iron station with a steam iron coupled to the steam boiler (20).

9. Household appliance according to one of claims 5 to 7, **characterised by** an embodiment as a steam cleaning station with a steam cleaning appliance coupled to the steam boiler (20)

## Revendications

1. Générateur de vapeur (20) pour un appareil ménager (10), lequel générateur de vapeur peut être rempli, comprenant un espace intérieur (46) entouré par des parois de délimitation (22, 24, 26, 28, 30), une entrée (40) pour un liquide (74) étant ménagée dans au moins une paroi de délimitation (22), **caractérisé en ce que** l'entrée (40) est disposée de telle manière par rapport à un capteur (50) destiné à détecter un niveau de remplissage dans le générateur de vapeur (20) qu'un jet de liquide (72) entrant dans le générateur de vapeur (20) à partir de l'entrée (40) arrive d'abord sur une zone de couplage (54) du capteur (50) au générateur de vapeur (20) lorsque l'entrée (40) décharge du liquide (74) dans l'espace intérieur (46) du générateur de vapeur (20) avant que le liquide (74) ne soit collecté dans le générateur de vapeur (20), l'entrée (40) étant tournée avec son ouverture (42) vers la zone de couplage (54) et le capteur (50) étant disposé à une hauteur laquelle correspond à la hauteur théorique du niveau de liquide dans le générateur de vapeur (20).

2. Générateur de vapeur selon la revendication 1,
**caractérisé en ce que** l'entrée (40) est tournée, avec son ouverture (42), contre une zone supérieure (58) de la zone de couplage (54).

3. Générateur de vapeur selon la revendication 1 ou 2,
**caractérisé en ce que** l'entrée (40) est disposée de manière géodésique au-dessus du capteur (50).

4. Générateur de vapeur selon la revendication 1, 2 ou 3,
**caractérisé en ce que** le capteur (50) est disposé sur une paroi de délimitation latérale (26) du générateur de vapeur (20) et **en ce que** l'entrée (40) est disposée dans une paroi de délimitation supérieure (22) du générateur de vapeur (20).

5. Appareil ménager (10) comprenant un générateur de vapeur (20) pouvant être rempli, selon l'une quelconque des revendications 1 à 4.

6. Appareil ménager selon la revendication 5,
**caractérisé en ce que** le capteur (50) est un capteur de température.

7. Appareil ménager selon la revendication 6,
**caractérisé en ce que** le capteur (50) est un élément à résistance NTC.

8. Appareil ménager selon l'une quelconque des revendications 5 à 7,
**caractérisé par** une conception en tant que station de fer à repasser à vapeur comprenant un fer à repasser à vapeur (12) couplé au générateur de vapeur (20).

9. Appareil ménager selon l'une quelconque des revendications 5 à 7,
**caractérisé par** une conception en tant que station de nettoyage à la vapeur comprenant un appareil de nettoyage à la vapeur (12) couplé au générateur de vapeur (20).
